# EUROPEAN PATENT SPECIFICATION

(11) **EP 1 544 064 B1**
(45) Date of publication and mention of the grant of the patent: **07.02.2007**
(21) Application number: 04257822.9
(22) Date of filing: 15.12.2004
(51) Int. Cl.: B60R 25/00

(54) **Vehicle securtity apparatus**
Fahrzeugdiebstahlsicherheitsvorrichtung
Dispositif de sécurité antivol pour véhicule

(30) Priority: 15.12.2003 GB 0329017; 01.07.2004 GB 0414794
(43) Date of publication of application: 22.06.2005
(73) Proprietor: AL-KO KOBER AG, D-89359 Kötz (DE)
(72) Inventor: Wilson, Gary c/o AL-KO Kober Limited, Southam, Warwickshire CV47 0AL (GB); Sharratt, Barry c/o AL-KO Kober Limited, Southam, Warwickshire CV47 0AL (GB); Hall, Steven c/o AL-KO Kober Limited, Southam, Warwickshire CV47 0AL (GB); Köhler, Robert c/o AL-KO Kober AG, 89359 Kotz (DE); Bestler, Wolfgang c/o AL-KO Kober AG, 89359 Kotz (DE); Beck, Gerhard c/o AL-KO Kober AG, 89359 Kotz (DE); Fink, Bernd c/0 AL-KO Kober AG, 89359 Kötz (DE); Maierle, Josef c/o AL-KO Kober AG, 89359 Kötz (DE)
(74) Representative: Gray, James

(56) References cited:
- US-A- 4 622 833
- US-B1- 6 427 498

## Description

The present invention relates to a vehicle security apparatus and in particular to a security apparatus operable to prevent the unauthorised movement of a towable vehicles and equipment.

The unauthorised removal of towable vehicles and equipment, such as trailers and caravans, is a growing problem. Wheel clamp devices which fit over and around one or more wheels of such vehicles have been utilised with limited success as they are easily accessible and can often be removed by persons equipped with cutting tools. Known wheel clamp devices are also usually quite bulky which can lead to storage problems when not in use.

GB 2233616 discloses a security apparatus which is fittable between opposed wheels of a towable vehicle such as a trailer. Installation of the device requires the accurate alignment of two elongate members under the towable vehicle such that apertures in each elongate member are aligned, followed by the installation of a padlock through the apertures. Accurate alignment of the members and installation of the padlock is hindered by the presence of the wheels and body of the towable vehicle, while the padlock is left exposed and is hence vulnerable to tampering.

US 6,427,498 describes a security apparatus which includes a hooked member which, in use, is fitted through a wheel of a towable vehicle and around a portion of the vehicle chassis. The hooked member is secured by the use of a padlock which is attached to a portion of the member which is external to the wheel. The fitting of the hooked member to the towable vehicle typically requires very careful positioning of the wheel with respect to the chassis, while the padlock is readily accessible and hence prone to tampering and attempted unauthorised removal.

US 4,622,833 discloses a security apparatus for a towable vehicle which comprises a tube secured to an axle of the vehicle and a pin extendable through a wheel of the vehicle which is receivable in tube. The pin, in use extends through both the wheel and axle flange to which the wheel is mounted and hence the apparatus of US 4,622,833 is not suitable for towable vehicles having a braking arrangement, such as a drum brake, provided behind the wheel. Installation of the device requires the removal of one of the bolts used to secure the wheel to the axle flange

According to a first aspect the present invention there is provided a towable vehicle security apparatus comprising a base securable to a suspension component of a towable vehicle chassis and a locking assembly releasably securable to said base, the locking assembly, in use, being positionable through an aperture of a wheel of the towable vehicle to prevent the rotation of the wheel relative to the suspension component to which the base is secured, characterised in that the locking assembly includes a threaded portion receivable by the base.

The present invention provides a compact security apparatus which, in use prevents the rotation of a wheel with which it is associated. The position of the base upon a movable suspension component of the towable vehicle chassis restricts access to the security apparatus as, in use, it is shielded by the vehicle wheel, suspension member and underside of the towable vehicle. The locking apparatus extends through a pre-existing aperture of the wheel, for example an aperture defined between adjacent spokes and the rim of the wheel, and thereby negates the need for the wheel or the axle flange to which it is mounted to be modified to accommodate the security apparatus.

The base is provided with an attachment portion to permit the base to be secured to the vehicle chassis, and a seat portion adapted to receive a portion of the locking assembly. The attachment portion and seat portion may be defined by a common component. In an alternative embodiment the attachment portion and seat portion may comprise separate components which are associated with one another to define the base. The attachment portion is preferably provided with features which assist in the alignment and attachment of the attachment portion to the vehicle chassis. Said attachment features may comprise one or more projections, one or more recesses, or a combination thereof. The attachment portion is provided with a locking feature accessible through the seat portion by the locking assembly.

The seat portion may be provided with a recess adapted to receive said portion of the locking assembly. Preferably the recess is sized and shaped to conform closely to that of said portion of the locking assembly to prevent excessive relative therebetween, in use.

In the embodiment where the attachment and seat portions are defined by separate components, alignment means may be provided to assure the correct alignment therebetween. Said alignment means may comprise one or more projections receivable in one or more complimentary recesses.

The locking assembly preferably includes an elongate locking member and a securing means to releasably secure the locking member to the base. The locking member includes an end which, in use, may be receivable in the seat portion of the base. In an alternative embodiment the locking member may not be receivable in the base. In such an embodiment the securing means may extend from the locking member to the base. The locking member preferably includes an interface portion adapted to fit closely to an aperture of a wheel of the towable vehicle. The interface portion may preferably fully conform to the shape of said aperture. The interface portion may preferably take the form of a flange or boss of the locking member. The flange or boss may be provided with a protective coating. The interface portion may be formed integrally with the locking member. In an alternative embodiment the interface portion and locking member may comprise separate components which can be associated with one another. In such an embodiment the interface portion may be provided with an aperture configured to receive the locking member therethrough. The aperture may be tapered and configured to receive a complementarily tapered portion of the locking member.

The interface portion may be configured so as to cover one or more of the wheel nuts or wheel bolts used to the attach the wheel to the towable vehicle. The interface may be provided with an extension which, in use, overlies the one or more wheel nuts or wheel bolts.

The securing means may include an elongate member which, in use extends at least partially through the locking member. The elongate member may be provided within a longitudinal bore of the locking member. The elongate member may be provided at a first end with a formation co-operable with a complementary formation of the base. The first end of the elongate member may be threaded. The opposite end of the elongate member is provided with a formation mateable with an appropriately configured tool to assist in the fitting and removal of the elongate member to the base.

The locking assembly preferably also includes a plug fittable to the longitudinal bore of the locking member to shield the securing means and prevent access thereto. The plug is preferably releasably securable within the bore. The plug may be defined by a barrel lock.

According to a second aspect of the present invention there is provided a towable vehicle having a chassis and at least one wheel, the vehicle further including a security apparatus comprising a base secured to a suspension component of the chassis and a locking assembly releasably securable to said base, the locking assembly, in use, extending through an aperture of said at least one wheel to prevent the rotation thereof relative to the suspension component, characterised in that the locking assembly includes a threaded portion receivable by the base.

An embodiment of the present invention will now be described with reference to the accompanying drawings in which:
Figure 1 shows a cross-sectional side view of a security device according to the present invention fitted to a vehicle suspension assembly;
Figure 2 shows a side view of a seat member of the present invention;
Figure 3 shows a side view of an attachment bracket of the present invention;
Figure 4 shows an end view of a locking member of the present invention;
Figure 5 shows a side view of the locking member of fig. 4;
Figure 6 shows a perspective view of a wheel profile collar according to an alternative embodiment of the present invention;
Figure 7 shows a side view of a locking member of an alternative embodiment of the present invention;
Figure 8 shows a cross-sectional side view of an alternative embodiment of the security device according to the present invention fitted to a vehicle suspension assembly;
Figure 9 shows an exploded perspective view of a further embodiment of a security device according to the present invention;
Figure 10 shows an assembled view of the security apparatus of figure 9; and
Figure 11 shows a partially sectioned view of a security apparatus according to a further embodiment of the present invention

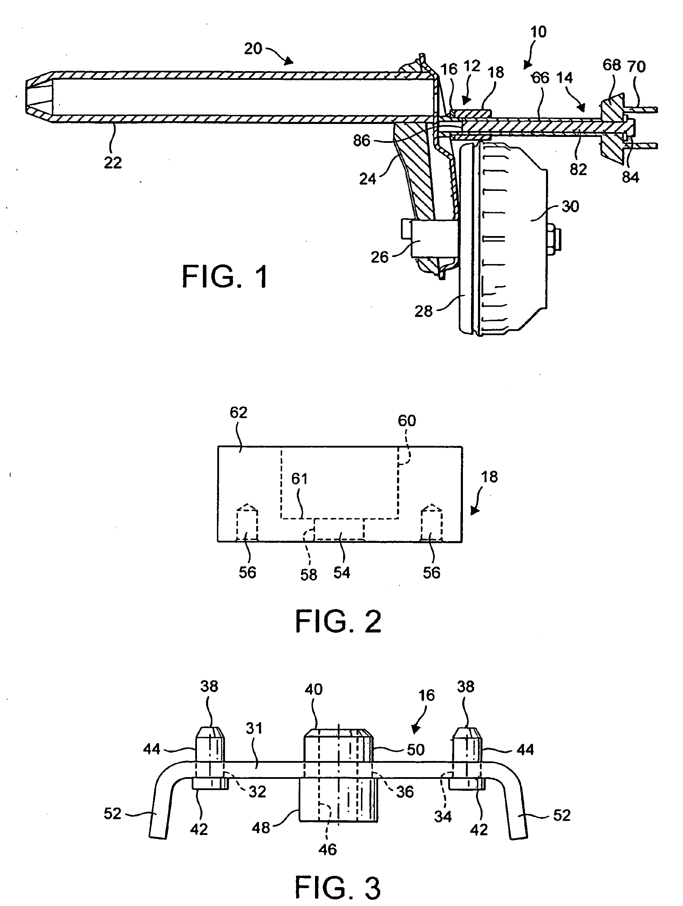

Referring firstly to figures 1 to 6 there is shown a security device, generally designated 10, comprising a base 12 and locking assembly 14. The base 12 comprises an attachment bracket 16 and a seat member 18. The device 10 is adapted to be fitted to a towable vehicle suspension assembly 20 as shown in fig. 1. The assembly 20 is of the torsion type and comprises a tubular member 22, a trailing arm 24 and a stub axle 26. The tubular member 22 is adapted to be received together with a resilient torsion member (not shown) in a tubular axle (also not shown). The stub axle 26 caries a braking assembly of which the backing plate 28 and brake drum 30 are visible.

The attachment bracket 16 comprises a substantially "U" shaped member 31 formed from a strip of metal, for example steel. The member 31 is provided with opposing legs 52 to facilitate the attachment of the bracket 16 to the trailing arm 24, for example by welding. The member 31 is further provided with three spaced through apertures 32,34,36 which are sized to receive two location dowels 38 and a threaded ferule 40. The dowels 38 comprise a head portion 42 having a diameter greater than the respective dowel aperture 32,34, and a body portion 44 having a diameter able to fit through a dowel aperture 32, 34. The ferule 40 is cylindrical and has a threaded through aperture 46. In a similar manner to the dowels 38, the ferule 40 is provided with a head portion 48 having a diameter greater than the ferule aperture 36 and a body portion 50 having a diameter able to fit through the ferule aperture 36. The dowels 38 and ferule 40 are retained in association with the "U" shaped member 31 by any appropriate means such as, for example, welding or an interference fit between the components.

The seat member 18 comprises a metal body 62 having a through aperture 54 and a pair of blind apertures 56. The blind apertures 56 are spaced and sized to receive the portions of the dowels 38 which project from the bracket 16 and hence in combination serve to locate the seat member 18 relative to the bracket 16. The through aperture 54 has a first portion 58 which is adapted to receive the projecting portion of the ferule 40 and a second portion 60 which is adapted to receive the locking assembly 14 and which will be described in greater detail below.

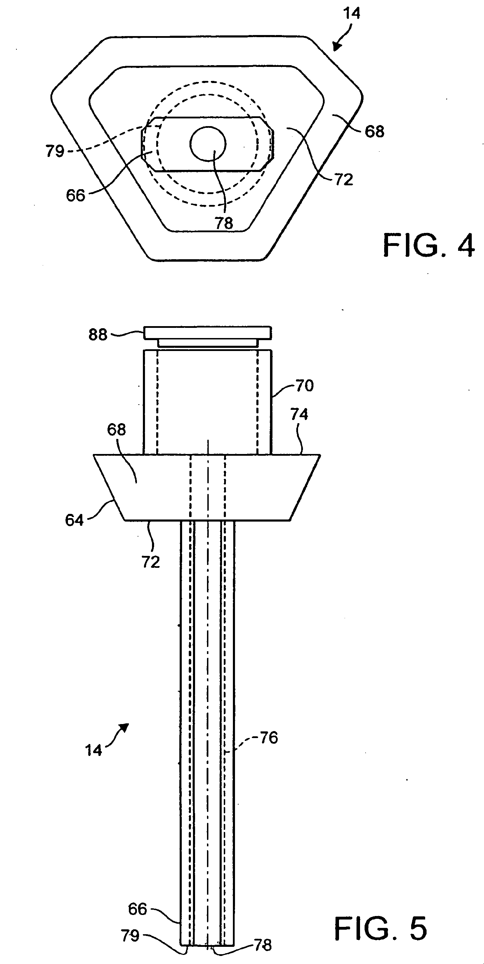

The locking assembly 14 includes a metal body 64 having an elongate fore portion 66, a boss 68, and a cylindrical shield 70. The fore portion 66 has a uniform octagonal cross-sectional shape over its length and is adapted to fit closely into the second portion 60 of the seat member through aperture 54. In use, the end face 79 of the fore portion 66 rests against the floor 61 of the second portion 60. The boss 68 is provided with opposing front and rear faces 72,74 from which the fore portion 66 and shield 70 extend respectively. As can be seen from the end view of fig. 4 the boss 68 has a substantially hexagonal shape comprising three longer and three shorter sides. The side view of fig. 5 shows the boss 68 to have a tapered profile between the faces 72,74.

The boss 68 is sized and shaped to conform to an aperture of a road wheel, for example an aperture defined and enclosed by adjacent spokes, and portions of the wheel rim and centre. It will be appreciated that other shapes and configurations of boss 68 may be utilised depending upon the size and shape of the apertures in a given wheel. The tapered nature of the boss 68 described above, and the appropriate length of the fore portion 66, enables the boss 68, in use, to lie flush with the outer surface of the wheel. The tapered surface of the boss 68 may be provided with a protective coating, for example a resiliently deformable plastics material, so as to reduce the possibility of damaging the wheel during application or removal of the locking assembly 14.

A through aperture 76 is provided between respective openings 78,80 in the distal end face 79 of the fore portion 66 and the rear face 74 of the boss 68. The aperture 76 is sized so as to be able to receive a bolt 82 therethrough which, in use, secures the locking assembly 14 to the base 12. The bolt 82 is of sufficient length that, in use, the bolt head 84 is fully surrounded by the cylindrical shield 70 while the opposite end 86 of the bolt 82 is received in the threaded aperture 46 of the ferule 40 as shown in fig. 1. Advantageously the bolt head 84 is of the security type which requires an appropriately configured socket to apply torque thereto The wall of the cylindrical shield 70 is of a sufficient height so as to prevent access to the bolt head 84 without a socket, and of a sufficient thickness to resist deformation should an attempt be bade to apply a torque to the bolt head 84 by crushing the shield 70 by the use of grips or an oversize wrench. Optionally the shield 70 may be provided with a plug 88 which, in use, prevents access to the bolt head 84. The plug is preferably provided with locking means (not shown) which prevent its unauthorised removal.

The device 10 may be fitted to a towable vehicle during the manufacture thereof or, alternatively, may be retrofitted to an existing towable vehicle by means of a replacement axle set. The device 10 may be retrofitted where there is sufficient space for the base 12 to be fitted in a position where it is both accessible through a wheel aperture for the fitting and removal of the locking assembly 14, and does not impede the operation of the towable vehicle when not in use.

Operation of the device 10 is straightforward. In order to prevent the unauthorised towing of a towable vehicle, the vehicle is first moved to a position where it is intended to remain and an aperture of the wheel with which the device 10 is associated is aligned with the base 12. The metal body 64 of the locking assembly 14 is then introduced through the wheel aperture and the fore portion 66 fitted to the seat member through aperture 54. The bolt 82 is then introduced through the body 64, mated with the thread of the ferule aperture 46 and tightened. Should an attempt be made to tow the vehicle without removing the locking assembly 14, then rotation of the wheel is prevented. Force applied to the towable vehicle is transmitted from the wheel to the boss 68 and in turn through the fore portion 66 of the locking member to the base assembly 12 and the vehicle suspension. The towable vehicle may thus only be moved by overcoming the resistance applied by the non- turning wheel to ground. Should a towing vehicle succeed in dragging the towable vehicle, the tyre of the non-turning wheel will eventually burst and thereby prevent further movement. Removal of the locking member 14 is achieved by undertaking the reverse of the procedure described above.

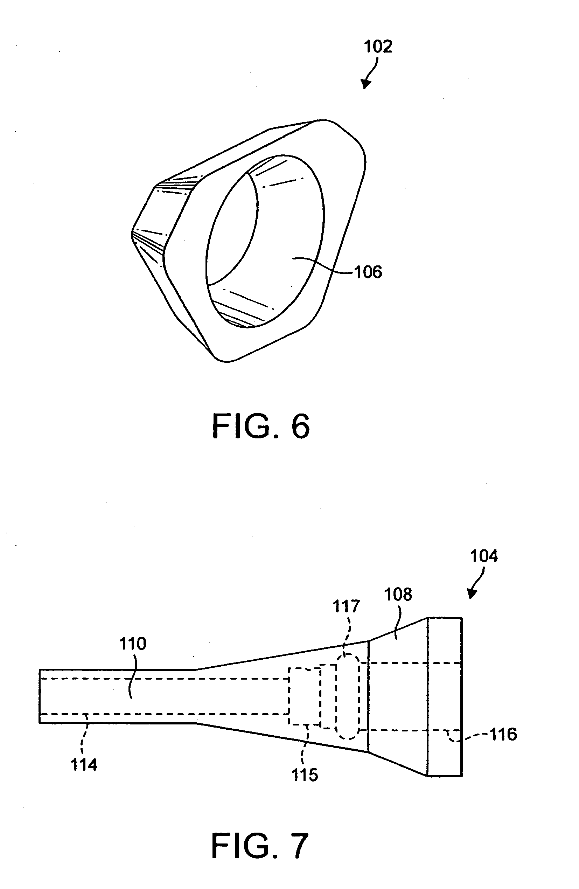

Referring now to Figs. 6, 7 and 8, there is shown an alternative embodiment of a security device, generally designated 100, according to an alternative embodiment of the present invention. Features and components common to the embodiment of Figs. 1 to 5 are identified with like reference numerals. The alternative embodiment differs in that the metal body of locking assembly 14 is of a two piece construction comprising a separate boss or wheel interface portion 102 which is fittable to a locking member 104. Both the boss and locking member are manufactured from metal. The boss 102 is provided with a tapered through aperture 106 which, in use, receives a correspondingly tapered portion 108 of the locking member 104.

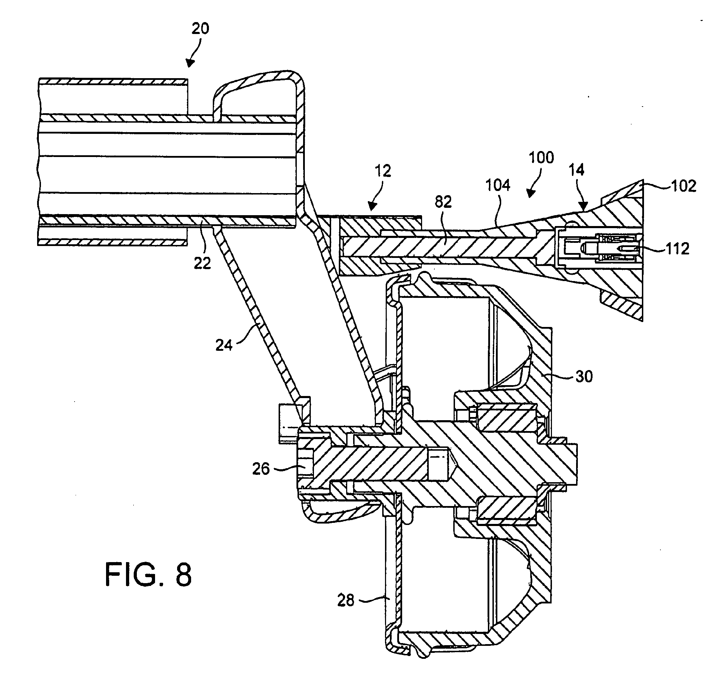

The locking member 104 is further provided with a through aperture 110 into which are received, in use, the bolt 82 and a lock barrel 112. The through aperture 110 comprises a fore portion 114 having a first diameter, an intermediate portion 115 having a second diameter, and an end portion 116 having a third diameter portion. The fore portion 114 is sized so as to receive the threaded portion of the bolt 82 therethrough, while the intermediate portion 115 is sized to receive the head of the bolt 82. The end portion 116 is sized to receive a lock barrel 112 and includes a recess 117 positioned so as to receive a locking feature of the barrel lock 112. As can be seen from figure 8 the bolt 82, in use, is fully received within the locking member 104 and is shielded by the lock barrel 112. The lock barrel 112, when fitted, prevents access to the head of the bolt 82

The provision of a separate boss and locking member 102, 104 is advantageous in that an interchangeable selection of bosses 102 may be provided to take into account different configurations of wheel fitted to a towable vehicle. By fully recessing the bolt 82 within the locking member 104 the possibility of a person gaining unauthorised access to the bolt head in an attempt to remove the device 100 is reduced further.

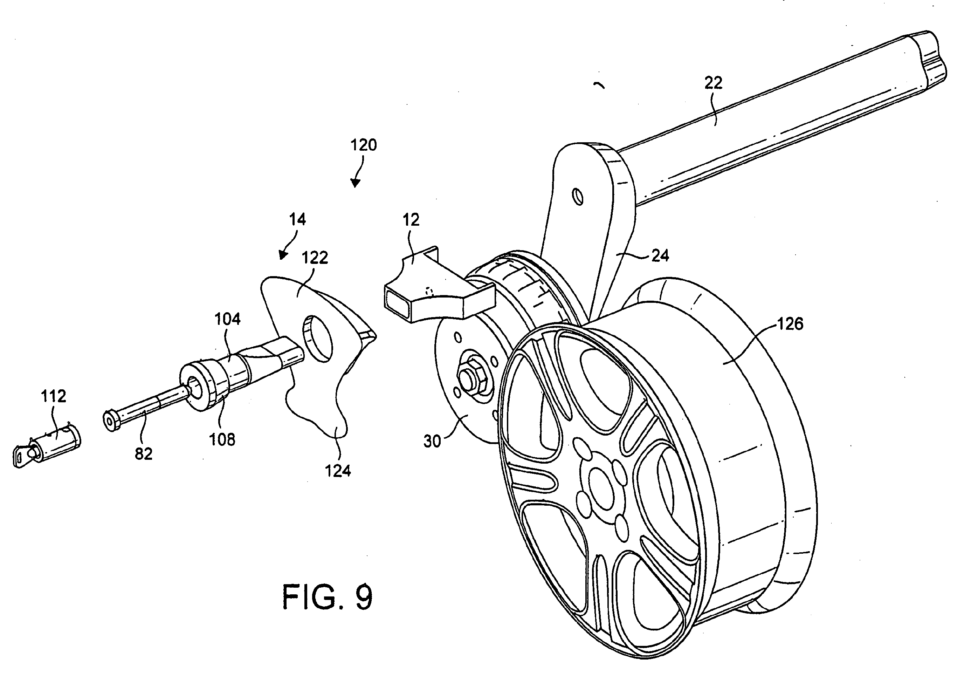

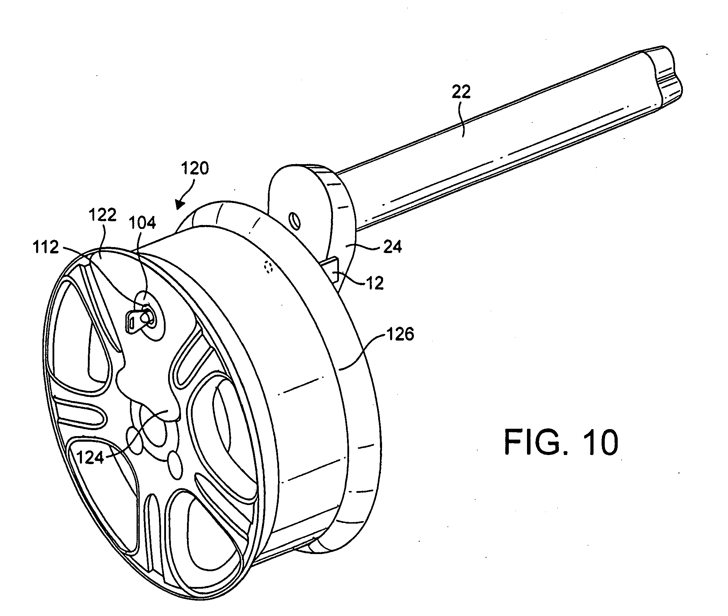

Referring to figures 9 and 10 there is shown a further embodiment of a security apparatus, generally designated 120, according to a further embodiment of the present invention. Features common to the earlier described embodiments are identified with like reference numerals. The apparatus 120 is similar to that described with reference to figures 7 and 8 in that the metal body of the locking assembly 14 is of a two piece construction comprising a locking member 104 and a separate boss 122. The boss 122 includes an extension 124 which, in use, overlies and prevents access to two adjacent wheel nuts of a wheel 126 to which the apparatus 120 is fitted.

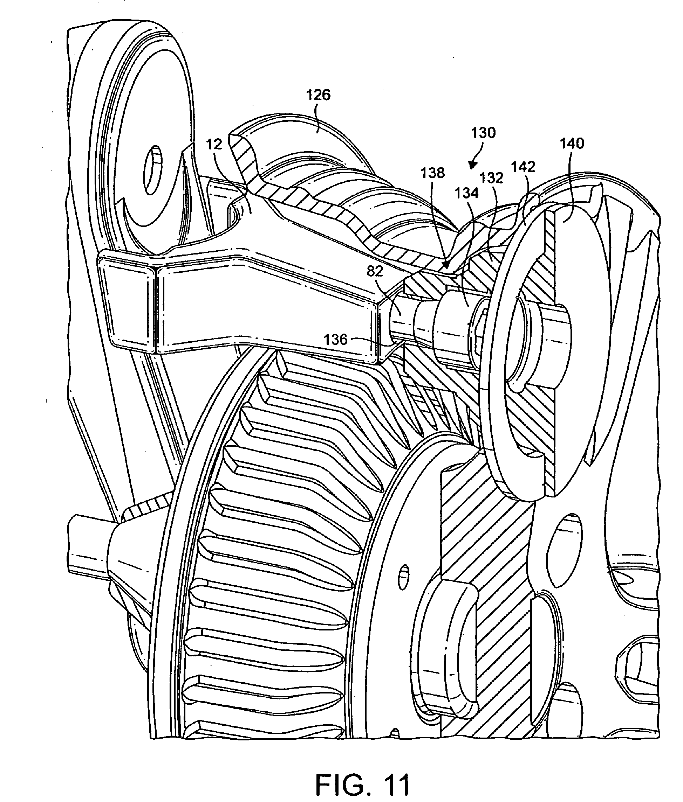

Referring finally to figure 11 there is shown a further embodiment of a security apparatus, generally designated 130, according to a further embodiment of the present invention. Features common to the earlier described embodiments are identified with like reference numerals. The apparatus 130 comprises a base 12 fitted to the trailing arm 24 of a towable vehicle suspension and a locking assembly 14 fittable to the base 12. The locking assembly 14 comprises a metal body 132 fittable into an aperture of a wheel 126 and a bolt 82.

It will be appreciated that the base 12 of the embodiment of figure 11 is longer than the bases 12 of the previously described embodiments. The base 12 of the embodiment of figure 11 thus projects from the trailing arm 24 beyond the inner rim of the wheel 126 and into the annular space defined between the wheel 126 and the brake drum 30. Consequently both the metal body 132 and bolt 182 are shorter than those described with reference to the earlier described embodiments. The bolt 82 extends through a bore 134 of the body 132 and into a threaded hole 136 of the base 12. The bolt 82 may be loosely retained in the bore 134, for example by a circlip, to prevent the bolt 82 and body 132 becoming separated when not fitted to the base 12. The body 132 includes a tapered fore portion 138 which, in use extends through the aperture of the wheel 126 and a flange 140 having dimensions greater than those of the wheel aperture so as to prevent the body 132 from being able to pass fully through the wheel aperture. The flange 140 is provided with an annular gasket 142 of a resiliently compressible material which, in use, is interposed between the flange 140 and the wheel 126.

The apparatus 130 may be installed in a manner similar to that described above for the embodiments of figures 1 to 10. An aperture of a wheel 126 of a towable vehicle is aligned with the base 12 such that the base 12 is visible and accessible therethrough. The body 132 is then fitted to the wheel aperture and the bolt 82 engaged in the threaded hole 136 of the base 12. It will be appreciated that the apparatus 130 shown in figure 11 differs from the embodiments of figures 1 to 10 in that only the bolt 82 is received by the base 12 and not the body 132 and bolt 82. In use, the end face of the body 132 rests against the corresponding end face of the base 12 and is clamped securely thereto by the bolt. The provision of the compressible gasket 142 ensures that the metal body 132 is able to fit closely to the wheel 126 without scratching or damaging the exterior thereof. The lengths of the base 12 and body 132 may be such that a degree of compression of the gasket 142 is required to enable the respective end faces of the base 12 and body 132 to meet. Once the bolt 82 has been secured to the base 12 a plug in the form of a barrel lock (not shown) may be inserted into the open end of the bore 134 to prevent access to the bolt 82.

The present invention provides a simple and effective means of preventing the unauthorised movement of a towable vehicle. The device is less complicated and smaller than existing external wheel lock or clamp systems. The positioning of the interface between the base assembly and the locking member between the rear face of a wheel and the vehicle chassis substantially restricts access thereto and hence prevents tampering.

## Claims

1. A towable vehicle security apparatus (10,100,120,130) comprising a base (12) securable to a suspension component (20) of a towable vehicle chassis and a locking assembly (14) releasably securable to said base, the locking assembly (14), in use, being positionable through an aperture of a wheel (126) of the towable vehicle to prevent the rotation of the wheel (126) relative to the suspension component (20) to which the base (12) is secured, **characterised in that** the locking assembly (14) includes a threaded portion (86) receivable by the base (12).

2. A security apparatus (10,100,120,130) as claimed in claim 1 wherein the base (12) is provided with an attachment portion (16) to permit the base to be secured to the suspension component (20) and a seat portion (18) adapted to receive a portion of the locking assembly (14).

3. A security apparatus (10,100,120,130) as claimed in claim 2 wherein the seat portion (18) includes a recess (45) within which a portion of the locking assembly (14) is receivable.

4. A security apparatus (10,100,120,130) as claimed in claim 2 or claim 3 wherein the base (12) is provided with a threaded recess (46) accessible through the seat portion (18) by the locking assembly (14).

5. A security apparatus (10,100,120,130) as claimed in any preceding claim wherein the locking assembly (14) includes an elongate locking member (64,104,132) and a securing means (82,132) to releasably secure the locking member (64,104,132) to the base (12).

6. A security apparatus (10,100,120,130) as claimed in claim 5 wherein the locking member (64,104,132) includes an interface portion (68,102) shaped to fit closely to an aperture of a wheel (126) of the towable vehicle.

7. A security apparatus (10,100,120,130) as claimed in claim 6 wherein the interface portion (68,102) comprises a flange (140) of the locking member (644,104,132).

8. A security apparatus (10,100,120,130) as claimed in claim 6 or claim 7 wherein the interface portion (102) and locking member (104) comprise separate components which are fittable to one another.

9. A security apparatus (10,100,120,130) as claimed in claim 8 wherein the interface portion (102) is provided with an aperture (106) configured to receive the locking member (104) therethrough.

10. A security apparatus (10,100,120,130) as claimed in claim 9 wherein the aperture (106) of the interface portion (102) is tapered and configured to receive a complementarily tapered portion (108) of the locking member (104).

11. A security apparatus (10,100,120,130) as claimed in any of claims 6 to 10 wherein a portion 124) of the locking assembly is configured so as to cover one or more of the wheel nuts or wheel bolts used to the attach the wheel (120) to the towable vehicle.

12. A security apparatus (10,100,120,130) as claimed in claim 11 wherein the interface portion (60,102) of the locking assembly is provided with an extension which, in use, overlies the one or more wheel nuts or wheel bolts.

13. A security apparatus (10,100,120,130) as claimed in any of claims 5 to 12 wherein the securing means (82,134) comprises an elongate member which, in use, extends through a longitudinal bore (76,110) of the locking member (64,104,132).

14. A security apparatus (10,100,120,130) as claimed in claim 13 wherein said first end (86) of the elongate member is threaded.

15. A security apparatus (10,100,120,130) as claimed in claim 13 or claim 14 wherein the opposite end (84) of the elongate member is provided with a formation mateable with an appropriately configured tool to assist in the fitting and removal of the elongate member to the base (12).

16. A security apparatus (10,100,120,130) as claimed in any of claims 13 to 15 wherein the locking assembly (14) includes a plug fittable to the longitudinal bore (76,110) of the locking member to shield the securing means (82,134) and prevent access thereto.

17. A security apparatus (10,100,120,130) as claimed in claim 16 wherein the plug is in the form of a barrel lock (112).

18. A towable vehicle having a chassis and at least one wheel (120), the vehicle further including a security apparatus (10,100,120,130) comprising a base (12) secured to a suspension component (20) of the chassis and a locking assembly (14) releasably securable to said base (12), the locking assembly (14), in use, extending through an aperture of said at least one wheel to prevent the rotation thereof relative to the suspension component (20), **characterised in that** the locking assembly (14) includes a threaded portion (86) receivable by the base (12).

19. A towable vehicle as claimed in claim 18 wherein the base (12) is secured to a suspension arm (24) of the chassis.

20. A towable vehicle as claimed in claim 18 or claim 19 wherein the base (12) comprises an attachment portion (16) secured to the suspension component (20) and a seat portion adapted to receive a portion of the locking assembly (14).

21. A towable vehicle as claimed in claim 20 wherein the seat portion (18) includes a recess (54) within which a portion of the locking assembly (14) is receivable.

22. A towable vehicle as claimed in claim 20 or claim 21 wherein the base (12) is provided with a threaded recess (46) accessible through the seat portion (18) by the threaded portion of the locking assembly (14).

23. A towable vehicle as claimed in any of claims 18 to 22 wherein the locking assembly (14) includes an elongate locking member (64,104,132) and a securing means (82,134) to releasably secure the locking member (64,104,132) to the base (12).

24. A towable vehicle as claimed in claim 23 wherein the locking member (64,104,132) includes an interface portion (68,102) shaped to fit closely to an aperture of a wheel (26) of the towable vehicle.

25. A towable vehicle as claimed in claim 24 wherein the interface portion (68,102) comprises a flange (140) of the locking member (64,104,132).

26. A towable vehicle as claimed in claim 24 or claim 25 wherein the interface portion (102) and locking member (104) comprise separate components which are fittable to one another.

27. A towable vehicle as claimed in claim 26 wherein the interface portion (102) is provided with an aperture (106) configured to receive the locking member (104) therethrough.

28. A towable vehicle as claimed in claim 9 wherein the aperture of the interface (106) portion is tapered and configured to receive a complementarily tapered portion (108) of the locking member (104).

29. A towable vehicle as claimed in any of claims 24 to 28 wherein a portion (124) of the locking assembly (14) is configured so as to cover one or more of the wheel nuts or wheel bolts used to the attach the wheel (126) to the towable vehicle.

30. A towable vehicle as claimed in claim 29 wherein the interface portion (68,102) of the locking assembly (14) is provided with an extension which, in use, overlies the one or more wheel nuts or wheel bolts.

31. A towable vehicle as claimed in any of claims 23 to 30 wherein the securing means (82,134) comprises an elongate member which, in use, extends through a longitudinal bore (76,110) of the locking member (64,104,132).

32. A towable vehicle as claimed in claim 31 wherein said first end (86) of the elongate member is threaded.

33. A towable vehicle as claimed in claim 31 or claim 32 wherein the opposite end (84) of the elongate member is provided with a formation mateable with an appropriately configured tool to assist in the fitting and removal of the elongate member to the base (12).

34. A towable vehicle as claimed in any of claims 30 to 33 wherein the locking assembly (14) includes a plug fittable to the longitudinal bore (76,110) of the locking member (64,104,132) to shield the securing means (82,134) and prevent access thereto.

35. A towable vehicle as claimed in claim 34 wherein the plug is in the form of a barrel lock (112).

## Patentansprüche

1. Sicherheitsvorrichtung für schleppbare Fahrzeuge (10, 100, 120, 130) umfassend eine Basis (12), die an einer Aufhängungskomponente (20) eines schleppbaren Fahrzeugchassis anbringbar ist und eine Verriegelungsanordnung (14), die lösbar an der Basis anbringbar ist, wobei die Verriegelungsanordnung (14) im Einsatz durch eine Öffnung eines Rades (126) des schleppbaren Fahrzeugs positionierbar ist, um die Drehung des Rades (126) relativ zur Aufhängungskomponente (20) zu verhindern, an der die Basis (12) angebracht ist, **dadurch gekennzeichnet, dass** die Verriegelungsanordnung (14) einen Gewindeteil (86) aufweist, der in die Basis (12) aufgenommen werden kann.

2. Sicherheitsvorrichtung (10, 100, 120, 130) nach Anspruch 1, worin die Basis (12) mit einem Befestigungsteil (16) versehen ist, um zu ermöglichen, dass die Basis an der Aufhängungskomponente (20) angebracht wird und einen Sitzteil (18), der geeignet ist, einen Teil der Verriegelungsanordnung (14) aufzunehmen.

3. Sicherheitsvorrichtung (10, 100, 120, 130) nach Anspruch 2, worin der Sitzteil (18) eine Ausnehmung (45) aufweist, in der ein Teil der Verriegelungsanordnung (14) aufgenommen werden kann.

4. Sicherheitsvorrichtung (10, 100, 120, 130) nach Anspruch 2 oder 3, worin die Basis (12) mit einer Ausnehmung (46) mit Gewinde versehen ist, die durch den Sitzteil (18) für die Verriegelungsanordnung (14) zugänglich ist.

5. Sicherheitsvorrichtung (10, 100, 120, 130) nach einem der vorhergehenden Ansprüche, worin die Verriegelungsanordnung (14) ein langgestrecktes Verriegelungsglied (64, 104, 132) und ein Sicherungsmittel (82, 132) zum lösbaren Anbringen des Verriegelungsglieds (64, 104, 132) an der Basis (12) aufweist.

6. Sicherheitsvorrichtung (10, 100, 120, 130) nach Anspruch 5, worin das Verriegelungsglied (64, 104, 132) einen Schnittstellenteil (68, 102) aufweist, der so gestaltet ist, dass er eng in eine Öffnung eines Rades (126) des schleppbaren Fahrzeugs passt.

7. Sicherheitsvorrichtung (10, 100, 120, 130) nach Anspruch 6, worin der Schnittstellenteil (68, 102) einen Flansch (140) des Verriegelungsglieds (64, 104, 132) umfasst.

8. Sicherheitsvorrichtung (10, 100, 120, 130) nach Anspruch 6 oder 7, worin der Schnittstellenteil (102) und das Verriegelungsglied (104) separate Komponenten umfassen, die zueinander passen.

9. Sicherheitsvorrichtung (10, 100, 120, 130) nach Anspruch 8, worin der Schnittstellenteil (102) mit einer Öffnung (106) versehen ist, die so konfiguriert ist, dass sie das Verriegelungsglied (104) **dadurch** aufnimmt.

10. Sicherheitsvorrichtung (10, 100, 120, 130) nach Anspruch 9, worin die Öffnung (106) des Schnittstellenteils (102) verjüngt ist und so konfiguriert, dass sie einen komplementären verjüngten Teil (108) des Verriegelungsglieds (104) aufnimmt.

11. Sicherheitsvorrichtung (10, 100, 120, 130) nach einem der Ansprüche 6 bis 10, worin ein Teil (124) der Verriegelungsanordnung so konfiguriert ist, dass sie eine oder mehrere Radmuttern oder Radschrauben abdeckt, die zum Befestigen des Rads (126) am schleppbaren Fahrzeug verwendet sind.

12. Sicherheitsvorrichtung (10, 100, 120, 130) nach Anspruch 11, worin der Schnittstellenteil (60, 102) der Verriegelungsanordnung mit einer Verlängerung versehen ist, die im Einsatz über der einen oder den mehreren Radmuttern oder Radschrauben liegt.

13. Sicherheitsvorrichtung (10, 100, 120, 130) nach einem der Ansprüche 5 bis 12, worin das Sicherungsmittel (82, 134) ein langgestrecktes Glied umfasst, das im Einsatz sich durch eine längliche Bohrung (76, 110) des Verriegelungsglieds (64, 104, 132) erstreckt.

14. Sicherheitsvorrichtung (10, 100, 120, 130) nach Anspruch 13, worin das erste Ende (86) des langgestreckten Glieds ein Gewinde aufweist.

15. Sicherheitsvorrichtung (10, 100, 120, 130) nach Anspruch 13 oder Anspruch 14, worin das gegenüberliegende Ende (84) des langgestreckten Glieds mit einer Formation versehen ist, die mit einem geeignet konfigurierten Werkzeug koppelbar ist, so dass das Einsetzen und Entfernen des langgestreckten Glieds an der Basis (12) unterstützt wird.

16. Sicherheitsvorrichtung (10, 100, 120, 130) nach einem der Ansprüche 13 bis 15, worin die Verriegelungsanordnung (14) einen in die längliche Bohrung (76, 110) des Verriegelungsglieds einsetzbaren Zapfen aufweist, um das Sicherungsmittel (82, 134) abzuschirmen und Zugang zu ihm zu verhindern.

17. Sicherheitsvorrichtung (10, 100, 120, 130) nach Anspruch 16, worin der Zapfen in Form eines Zylinderschlosses (112) vorliegt.

18. Schleppbares Fahrzeug mit einem Chassis und mindestens einem Rad (120), wobei das Fahrzeug ferner eine Sicherheitsvorrichtung (10, 100, 120, 130) aufweist, umfassend eine Basis (12), die an einer Aufhängungskomponente (20) des Chassis angebracht ist und eine Verriegelungsanordnung (14), die lösbar an der Basis (12) anbringbar ist, wobei die Verriegelungsanordnung (14) sich im Einsatz durch eine Öffnung des mindestens einen Rades erstreckt, um seine Rotation relativ zur Aufhängungskomponente (20) zu verhindern, **dadurch gekennzeichnet, dass** die Verriegelungsanordnung (14) einen Gewindeteil (86) aufweist, der in die Basis (12) aufgenommen werden kann.

19. Schleppbares Fahrzeug nach Anspruch 18, worin die Basis (12) an einem Aufhängungsarm (24) des Chassis angebracht ist.

20. Schleppbares Fahrzeug nach Anspruch 18 oder Anspruch 19, worin die Basis (12) einen Befestigungsteil (16) umfasst, der an der Aufhängungskomponente (20) angebracht ist und einen Sitzteil, der geeignet ist, einen Teil der Verriegelungsanordnung (14) aufzunehmen.

21. Schleppbares Fahrzeug nach Anspruch 20, worin der Sitzteil (18) eine Ausnehmung (54) aufweist, in der ein Teil der Verriegelungsanordnung (14) aufgenommen werden kann.

22. Schleppbares Fahrzeug nach Anspruch 20 oder Anspruch 21, worin die Basis (12) mit einer Ausnehmung (46) mit Gewinde versehen ist, die durch den Sitzteil (18) für den Gewindeteil der Verriegelungsanordnung (14) zugänglich ist.

23. Schleppbares Fahrzeug nach einem der Ansprüche 18 bis 22, worin die Verriegelungsanordnung (14) ein langgestrecktes Verriegelungsglied (64, 104, 132) und ein Sicherungsmittel (82, 132) zum lösbaren Anbringen des Verriegelungsglieds (64, 104, 132) an der Basis (12) aufweist.

24. Schleppbares Fahrzeug nach Anspruch 23, worin das Verriegelungsglied (64, 104, 132) einen Schnittstellenteil (68, 102) aufweist, der so gestaltet ist, dass er eng in eine Öffnung eines Rades (126) des schleppbaren Fahrzeugs passt.

25. Schleppbares Fahrzeug nach Anspruch 24, worin der Schnittstellenteil (68, 102) einen Flansch (140) des Verriegelungsglieds (64, 104; 132) umfasst.

26. Schleppbares Fahrzeug nach Anspruch 24 oder Anspruch 25, worin der Schnittstellenteil (102) und das Verriegelungsglied (104) separate Komponenten umfassen, die zueinander passen.

27. Schleppbares Fahrzeug nach Anspruch 26, worin der Schnittstellenteil (102) mit einer Öffnung (106) versehen ist, die so konfiguriert ist, dass sie das Verriegelungsglied (104) **dadurch** aufnimmt.

28. Schleppbares Fahrzeug nach Anspruch 9, worin die Öffnung (106) des Schnittstellenteils verjüngt ist und so konfiguriert, dass sie einen komplementären verjüngten Teil (108) des Verriegelungsglieds (104) aufnimmt.

29. Schleppbares Fahrzeug nach einem der Ansprüche 24 bis 28, worin ein Teil (124) der Verriegelungsanordnung (14) so konfiguriert ist, dass sie eine oder mehrere Radmuttern oder Radschrauben abdeckt, die zum Befestigen des Rads (126) am schleppbaren Fahrzeug verwendet sind.

30. Schleppbares Fahrzeug nach Anspruch 29, worin der Schnittstellenteil (68, 102) der Verriegelungsanordnung (14) mit einer Verlängerung versehen ist, die im Einsatz über der einen oder den mehreren Radmuttern oder Radschrauben liegt.

31. Schleppbares Fahrzeug nach einem der Ansprüche 23 bis 30, worin das Sicherungsmittel (82, 134) ein langgestrecktes Glied umfasst, das im Einsatz sich durch eine längliche Bohrung (76, 110) des Verriegelungsglieds (64, 104, 132) erstreckt.

32. Schleppbares Fahrzeug nach Anspruch 31, worin das erste Ende (86) des langgestreckten Glieds ein Gewinde aufweist.

33. Schleppbares Fahrzeug nach Anspruch 31 oder Anspruch 32, worin das gegenüberliegende Ende (84) des langgestreckten Glieds mit einer Formation versehen ist, die mit einem geeignet konfigurierten Werkzeug koppelbar ist, so dass das Einsetzen und Entfernen des langgestreckten Glieds an der Basis (12) unterstützt wird.

34. Schleppbares Fahrzeug nach einem der Ansprüche 30 bis 33, worin die Verriegelungsanordnung (14) einen in die längliche Bohrung (76, 110) des Verriegelungsglieds (64, 104, 132) einsetzbaren Zapfen aufweist, um das Sicherungsmittel (82, 134) abzuschirmen und Zugang zu ihm zu verhindern.

35. Schleppbares Fahrzeug nach Anspruch 34, worin der Zapfen in Form eines Zylinderschlosses (112) vorliegt.

## Revendications

1. Appareil de sécurité (10, 100, 120, 130) pour véhicule remorquable, comprenant une base (12) qui peut être fixée à un composant de suspension (20) d'un châssis de véhicule remorquable et un ensemble (14) de blocage qui peut être fixé de façon temporaire à la base, l'ensemble de blocage (14), pendant l'utilisation, pouvant être mis en place dans un orifice d'une roue (126) du véhicule remorquable pour empêcher la rotation de la roue (126) par rapport aux composants de suspension (20) auxquels la base (12) est fixée, **caractérisé en ce que** l'ensemble de blocage (14) comprend une partie filetée (86) destinée à être logée par la base (12).

2. Appareil de sécurité (10, 100, 120, 130) selon la revendication 1, dans lequel la base (12) possède une partie de fixation (16) destinée à permettre la fixation de la base au composant de suspension (20) et une partie de siège (18) destinée à loger une partie de l'ensemble de blocage (14).

3. Appareil de sécurité (10, 100, 120, 130) selon la revendication 2, dans lequel la partie de siège (18) a une cavité (45) dans laquelle peut se loger une partie de l'ensemble de blocage (14).

4. Appareil de sécurité (10, 100, 120, 130) selon la revendication 2 ou 3, dans lequel la base (12) a une cavité taraudée (46) accessible par l'intermédiaire de la partie de siège (18) à l'ensemble de blocage (14).

5. Appareil de sécurité (10, 100, 120, 130) selon l'une quelconque des revendications précédentes, dans lequel l'ensemble de blocage (14) comporte un organe allongé de blocage (64, 104, 132) et un dispositif de fixation (82, 132) destiné à fixer temporairement l'organe de blocage (64, 104, 132) à la base (12).

6. Appareil de sécurité (10, 100, 120, 130) selon la revendication 5, dans lequel l'organe de blocage (64, 104, 132) comprend une partie d'interface (68, 102) ayant une forme lui permettant de s'adapter intimement à un orifice d'une roue (126) du véhicule remorquable.

7. Appareil de sécurité (10, 100, 120, 130) selon la revendication 6, dans lequel la partie d'interface (68, 102) comprend un flasque (140) de l'organe de blocage (644, 104, 132).

8. Appareil de sécurité (10, 100, 120, 130) selon la revendication 6 ou 7, dans lequel la partie d'interface (102) et l'organe de blocage (104) comportent des composants séparés qui peuvent s'ajuster l'un sur l'autre.

9. Appareil de sécurité (10, 100, 120, 130) selon la revendication 8, dans lequel la partie d'interface (102) a un orifice (106) de configuration permettant le logement de l'organe de blocage (104) lorsqu'il passe dans l'orifice.

10. Appareil de sécurité (10, 100, 120, 130) selon la revendication 9, dans lequel l'orifice (106) de la partie d'interface (102) a une forme effilée et une configuration permettant le logement d'une partie effilée de façon complémentaire (108) de l'organe de blocage (104).

11. Appareil de sécurité (10, 100, 120, 130) selon l'une quelconque des revendications 6 à 10, dans lequel une partie (124) de l'ensemble de blocage a une configuration telle qu'elle recouvre un ou plusieurs des écrous ou boulons de roue utilisés pour fixer la roue (120) au véhicule remorquable.

12. Appareil de sécurité (10, 100, 120, 130) selon la revendication 11, dans lequel la partie d'interface (60, 102) de l'ensemble de blocage a un prolongement qui, pendant l'utilisation, recouvre l'écrou ou boulon ou les écrous ou boulons de roue.

13. Appareil de sécurité (10, 100, 120, 130) selon l'une quelconque des revendications 5 à 12, dans lequel le dispositif de fixation (82, 134) comporte un organe allongé qui, pendant l'utilisation, s'étend dans un trou longitudinal (76, 110) de l'organe de blocage (64, 104, 132).

14. Appareil de sécurité (10, 100, 120, 130) selon la revendication 13, dans lequel la première extrémité (86) de l'organe allongé est filetée.

15. Appareil de sécurité (10, 100, 120, 130) selon la revendication 13 ou 14, dans lequel l'extrémité opposée (84) de l'organe allongé a un organe conformé destiné à coopérer de façon complémentaire avec un outil de configuration convenable destiné à faciliter le montage et l'extraction de l'organe allongé par rapport à la base (12).

16. Appareil de sécurité (10, 100, 120, 130) selon l'une quelconque des revendications 13 à 15, dans lequel l'ensemble de blocage (14) comprend un bouchon qui peut s'ajuster dans le trou longitudinal (76, 110) de l'organe de blocage pour protéger le dispositif de fixation (82, 134) et empêcher l'accès à celui-ci.

17. Appareil de sécurité (10, 100, 120, 130) selon la revendication 16, dans lequel le bouchon est sous forme d'un verrou à barillet (112).

18. Véhicule remorquable ayant un châssis et au moins une roue (120), le véhicule comprenant en outre un appareil de sécurité (10, 100, 120, 130) qui comporte une base (12) fixée à un composant de suspension (20) du châssis et un ensemble de blocage (14) qui peut être fixé de façon temporaire à la base (12), l'ensemble de blocage (14), pendant l'utilisation, s'étendant par un orifice de la roue au moins pour empêcher la rotation de celle-ci par rapport au composant de suspension (20), **caractérisé en ce que** l'ensemble de blocage (14) a une partie filetée (86) qui peut être logée par la base (12).

19. Véhicule remorquable selon la revendication 18, dans lequel la base (12) est ficée à un bras de suspension (24) du châssis.

20. Véhicule remorquable selon l'une des revendications 18 et 19, dans lequel la base (12) possède une partie de fixation (16) destinée à permettre la fixation de la base au composant de suspension (20) et une partie de siège (18) destinée à loger une partie de l'ensemble de blocage (14).

21. Véhicule remorquable selon la revendication 20, dans lequel la partie de siège (18) a une cavité (54) dans laquelle peut se loger une partie de l'ensemble de blocage (14).

22. Véhicule remorquable selon la revendication 20 ou 21, dans lequel la base (12) a une cavité taraudée (46) accessible par l'intermédiaire de la partie de siège (18) à l'ensemble de blocage (14).

23. Véhicule remorquable selon l'une quelconque des revendications 18 à 22, dans lequel l'ensemble de blocage (14) comporte un organe allongé de blocage (64, 104, 132) et un dispositif de fixation (82, 132) destiné à fixer temporairement l'organe de blocage (64, 104, 132) à la base (12).

24. Véhicule remorquable selon la revendication 23, dans lequel l'organe de blocage (64, 104, 132) comprend une partie d'interface (68, 102) ayant une forme lui permettant de s'adapter intimement à un orifice d'une roue (26) du véhicule remorquable.

25. Véhicule remorquable selon la revendication 24, dans lequel la partie d'interface (68, 102) comprend un flasque (140) de l'organe de blocage (64, 104, 132).

26. Véhicule remorquable selon la revendication 24 ou 25, dans lequel la partie d'interface (102) et l'organe de blocage (104) comportent des composants séparés qui peuvent s'ajuster l'un sur l'autre.

27. Véhicule remorquable selon la revendication 26, dans lequel la partie d'interface (102) a un orifice (106) de configuration permettant le logement de l'organe de blocage (104) lorsqu'il passe dans l'orifice.

28. Véhicule remorquable selon la revendication 27, dans lequel l'orifice (106) de la partie d'interface (102) a une forme effilée et une configuration permettant le logement d'une partie effilée de façon complémentaire (108) de l'organe de blocage (104).

29. Véhicule remorquable selon l'une quelconque des revendications 24 à 28, dans lequel une partie (124) de l'ensemble de blocage (14)a une configuration telle qu'elle recouvre un ou plusieurs des écrous ou boulons de roue utilisés pour fixer la roue (120) au véhicule remorquable.

30. Véhicule remorquable selon la revendication 29, dans lequel la partie d'interface (68, 102) de l'ensemble de blocage a un prolongement qui, pendant l'utilisation, recouvre l'écrou ou boulon ou les écrous ou boulons de roue.

31. Véhicule remorquable selon l'une quelconque des revendications 23 à 30, dans lequel le dispositif de fixation (82, 134) comporte un organe allongé qui, pendant l'utilisation, s'étend dans un trou longitudinal (76, 110) de l'organe de blocage (64, 104, 132).

32. Véhicule remorquable selon la revendication 31, dans lequel la première extrémité (86) de l'organe allongé est filetée.

33. Véhicule remorquable selon la revendication 31 ou 32, dans lequel l'extrémité opposée (84) de l'organe allongé a un organe conformé destiné à coopérer de façon complémentaire avec un outil de configuration convenable destiné à faciliter le montage et l'extraction de l'organe allongé par rapport à la base (12).

34. Véhicule remorquable selon l'une quelconque des revendications 30 à 33, dans lequel l'ensemble de blocage (14) comprend un bouchon qui peut s'ajuster dans le trou longitudinal (76, 110) de l'organe de blocage (64, 104, 132) pour protéger le dispositif de fixation (82, 134) et empêcher l'accès à celui-ci.

35. Véhicule remorquable selon la revendication 34, dans lequel le bouchon est sous forme d'un verrou à barillet (112) .
